# EUROPÄISCHE PATENTANMELDUNG

(11) **EP 3 761 468 A1**
(43) Veröffentlichungstag der Anmeldung: **06.01.2021**
(21) Anmeldenummer: 19205140.7
(22) Anmeldetag: 24.10.2019
(51) Int. Cl.: H02G 3/04, H02G 3/06, H02G 3/00, F16L 3/00, H02G 3/32

(54) **DECKENMONTAGEVORRICHTUNG UND INSTALLATIONSVERFAHREN**

(30) Priorität: 02.07.2019 EP 19184033
(71) Anmelder: Gerster, Gaby, 8185 Winkel (CH)
(72) Erfinder: PFLUGER, Gerd, 4625 Oberbuchsiten (CH)
(74) Vertreter: Rutz & Partner

(57) **Zusammenfassung**

Die Deckenmontagevorrichtung (1) umfasst Installationsvorrichtungen (26, 61, 62, 64), mittels denen Leitungen, wie Medienleitungen und Energieversorgungsleitungen, entlang einem Installationsweg verlaufend an einer Gebäudedecke (10) installierbar sind. Erfindungsgemäss ist eine Montageplattform (2) vorgesehen, die Querprofile (21) umfasst, die quer zum zugehörigen Installationsweg und durch Installationsdistanzen voneinander beabstandet entlang dem Installationsweg angeordnet an oder in der Gebäudedecke (10) verankert sind und die durch formschlüssige Verbindungen oder Schraubverbindungen mit den Installationsvorrichtungen (26, 64) verbunden sind, die für jedes der Querprofile (21) wenigstens ein vertikal ausgerichtetes Montageprofil (26) aufweisen, das durch eine Verbindungsgarnitur (8) mit dem zugehörigen Querprofil (21) verbunden ist und das unterhalb der Montageplattform (2) durch eine formschlüssige Verbindung oder eine Schraubverbindung mit wenigstens einem horizontal ausgerichteten Horizontalausleger (62; 62L) verbunden ist, auf dem wenigstens eine Kabelbahn (61) abgelegt ist.

## Beschreibung

Die Erfindung betrifft eine Deckenmontagevorrichtung für die Montage von Leitungen, wie Leitungen zur Medien- und Energieversorgung, entlang von Installationswegen sowie ein Installationsverfahren zur Installation dieser Leitungen.

In Gewerbe- Industrie- und Verwaltungsgebäuden werden Kabel, insbesondere Kabel für Stark- und Schwachstromnetze in Kabelkanälen geführt, z.B. von einem Schaltfeld einer Zentrale zu verschiedenen Verbrauchern. Die installierten Kabel, die keine genügende Eigenstabilität aufweisen, werden durch Kabelführungsvorrichtungen gelagert und gegen äussere Einwirkungen geschützt.

Gemäss der EP1594204B1 umfassen solche Kabelführungsvorrichtungen normalerweise eine Deckenstütze, die einen waagrecht ausgerichteten Ausleger hält. Auf dem Ausleger ist eine Kabelbahn abgelegt, die der Aufnahme der Leitungen dient und die üblicherweise ein U-Profil mit einem Bodenelement aufweist, an dessen Seiten je ein Seitenteil vorgesehen ist.

Die Installation solcher Vorrichtungen ist regelmässig mit hohem Aufwand verbunden. Zur Montage der Deckenstützen sind Bohrungen in die Gebäudedecke einzuarbeiten, in die z.B. Segmentanker eingesetzt werden, mittels denen Deckenstützen mit der Decke verbunden werden. Hinsichtlich der zu tragenden Lasten und der Festigkeit der Kabelbahnen oder Kabelkanäle sind die Abstände zwischen den installierten Deckenstützen entsprechend zu wählen.

Der Aufbau der Kabelführungsvorrichtung erfolgt schrittweise, wobei Bohrungen in die Decke eingebracht werden, eine Deckenstützen an der Decke festgeschraubt und mit Auslegern versehen wird. Diese Arbeitsweise ist mit einem relativ hohen Arbeitsaufwand verbunden. Die resultierende Kabelführungsvorrichtung weist typischerweise eine beschränkte Aufnahmekapazität und eine geringe Flexibilität auf. Kabelleitungen werden alle in die Kabelbahnen eingelegt. Möglichkeiten zur Montage weitere Installationsvorrichtungen sind normalerweise nicht gegeben.

Nach dem Aufbau der Kabelführungsvorrichtung bildet diese ein starres Gebilde. Änderungen sind nur mit sehr grossem Aufwand realisierbar. Weiterhin ist die Verlegung zusätzlicher Kabel und Leitungen oder der Austausch von Kabeln und Leitungen kaum oder ebenfalls nur mit grossem Aufwand möglich. Ferner werden Leitungen meist ungeordnet verlegt.

In der EP2858189B1 ist beschrieben, dass in ein- und dieselbe Kabelbahn oft verschiedenartige Kabel und Leitungen, wie Leitungen des Stromnetzes, Leitungen der unterbruchsfreien Stromversorgung, Leitungen von Daten- und Kommunikationsnetzen oder Steuersystemen, parallel verlegt werden. Falls Starkstrom- und Schwachstromkabel nahe beieinander in der Kabelbahn liegen, können störende Interferenzen auftreten. Ferner wird darauf hingewiesen, dass Nachinstallationen, bei ungeordneter Verlegung der Kabel, nur mit entsprechendem Aufwand möglich sind. Es wird daher die Verwendung von Ordnungstrennvorrichtungen vorgeschlagen, mittels denen der Querschnitt der Kabelbahn segmentiert wird, um Kabel und Medienleitungen geordnet bzw. gruppiert zu verlegen. Die Gruppierung innerhalb einer Kabelbahn führt bei entsprechendem Aufwand zu einer Verbesserung ohne vollständig zu befriedigen. Nachteilig ist z.B., dass Handwerker beim Zugriff auf die ihnen zugeordneten Medienleitungen möglicherweise Medienleitungen anderer Art nicht mit der gebührenden Sorgfalt behandeln. Oft wird die Ordnung der verlegten Kabel auch bei Nachinstallationen oft nicht mehr beachtet.

Sofern z.B. bei einer Gebäudeerweiterung Nachinstallationen erforderlich sind, ist die vorgesehene Ordnungstrennung möglicherweise nicht mehr transparent und wird nicht mehr beachtet. Oft verfügen bestehende Installationen bei einer Gebäudeerweiterung oder bei Nutzungsänderungen auch nicht über die erforderliche Kapazität zur Aufnahme neuer oder anderer Medienleitungen. Bei solchen Änderungen oder Erweiterungen ist daher gegebenenfalls die Installation einer weiteren Kabelbahn erforderlich, was wiederum denselben Aufwand wie bei der Erstinstallation verursacht.

Der vorliegenden Erfindung liegt daher die Aufgabe zugrunde, eine verbesserte Deckenmontagevorrichtung für die Montage von Leitungen und ein verbessertes Installationsverfahren für die Installation von Leitungen zu schaffen.

Die erfindungsgemässe Deckenmontagevorrichtung soll mit geringem Aufwand montierbar, erweiterbar und änderbar sein. Vorrichtungsteile sollen verschiebbar sein, ohne dass Verankerungen in der Decke gelöst und neu gesetzt werden müssen.

Die Deckenmontagevorrichtung soll Installationsmöglichkeiten bieten, die es erlauben, erste und ergänzende Installationen mit geringem Aufwand und minimalem Raumbedarf durchzuführen. Die Erweiterung der Installation soll möglich sein, ohne dass zusätzliche Bohrungen in der Decke vorgenommen werden.

Dabei sollen alle üblichen Leitungen für die Medienversorgung und Energieversorgung von der optischen Faser bis zur Stromschiene vorteilhaft installierbar sein. Die Leitungen sollen geordnet und ortsgenau verlegt werden können.

Weitere Installationsvorrichtungen, insbesondere Kabelbahnen, sollen mit minimalem Aufwand und minimalem Raumbedarf bestehenden Installationen hinzugefügt werden können.

Die Installationswege der Leitungen sollen bereits in der Planung der Erstinstallation und der Nachinstallationen präzise festgelegt und den Installateuren, die Leitungen der Kommunikationstechnik, der Energietechnik, und weiterer Medien individuell verlegen, entsprechend vorgegeben werden können.

Die Installation von Leitungen, Geräten und Vorrichtungen soll auch Jahre nach der Erstinstallation leicht möglich sein. Insbesondere soll eine genaue Planung der Nachinstallationen möglich sein, ohne dass die installierten Leitungen zuvor in Augenschein genommen werden müssen. Nachinstallationen sollen dabei rasch und ohne Verschmutzung der Räume des Gebäudes durchgeführt werden können. Insbesondere sollen erneute Bohrungen in der Decke vermieden werden.

Die Elemente der Deckenmontagevorrichtung sollen in einfacher Weise miteinander verbunden und der Erstinstallation und bei Nachinstallationen mit minimalem Aufwand am Installationsort konfektioniert werden können.

Weiterhin sollen mit geringem Aufwand verschiedene Installationswege realisierbar sein. Leitungen dieser Installationswege sollen vorteilhaft umverteilt werden können, sodass beliebige Verzweigungen realisierbar sind.

Mittels der Deckenmontagevorrichtung soll in einfacher Weise auch eine abgehängte Decke vorteilhaft realisierbar sein.

Diese Aufgabe wird mit einer Deckenmontagevorrichtung und einem Installationsverfahren gelöst, welche die in Anspruch 1 bzw. 15 angegebenen Merkmale aufweist. Vorteilhafte Ausgestaltungen der Erfindung sind in weiteren Ansprüchen angegeben.

Deckenmontagevorrichtung umfasst Installationsvorrichtungen, mittels denen Leitungen, wie Medienleitungen und Energieversorgungsleitungen, entlang einem Installationsweg verlaufend an einer Gebäudedecke installierbar sind.

Erfindungsgemäss ist eine Montageplattform vorgesehen, die Querprofile umfasst, die quer zum Installationsweg und durch Installationsdistanzen voneinander beabstandet entlang dem Installationsweg angeordnet an oder in der Gebäudedecke verankert sind und die durch formschlüssige Verbindungen oder Schraubverbindungen mit den Installationsvorrichtungen verbunden oder verbindbar sind, die für jedes der Querprofile wenigstens ein vertikal ausgerichtetes Montageprofil aufweisen, das durch eine Verbindungsgarnitur mit dem zugehörigen Querprofil verbunden ist und das unterhalb der Montageplattform durch eine formschlüssige Verbindung oder eine Schraubverbindung mit wenigstens einem horizontal ausgerichteten Horizontalausleger verbunden ist, auf dem wenigstens eine Kabelbahn abgelegt ist.

Die an der Gebäudedecke stabil montierten Querprofile bilden eine Montageplattform mit Zugangspunkten für die Montage der Installationsvorrichtungen. Die Gebäudedecke ist das tragende Element der Montageplattform, weist nebst dieser Tragfunktion jedoch keine weiteren Funktionen mehr auf. Insbesondere sind in der Gebäudedecke keine weiteren Verankerungen mehr vorzunehmen. Alle weiteren Installationsarbeiten beschränken sich auf das Verschrauben oder formschlüssige Verbinden der Teile der der Installationsvorrichtungen untereinander oder mit der Montageplattform. Nach der Montage der Querprofile sind daher keine Bohrungen in der Gebäudedecke mehr erforderlich, weshalb auch keine entsprechenden Verunreinigungen mehr resultieren.

Die Querprofile werden durch Ankerelemente, wie Schrauben oder Segmentanker an der Gebäudedecke verankert oder bei der Fertigung der Gebäudedecke in diese vorzugsweise bündig abschliessend integriert. Die Montage der Querprofile mittels Schrauben oder Segmentanker kann in einem gesonderten Arbeitsgang mit minimalem Aufwand von Personal durchgeführt werden, welches Routinearbeiten durchführt. Die Querprofile, die bei einem gerade verlaufenden Installationsweg parallel zueinander ausgerichtet werden, weisen einen gegenseitigen Abstand auf, der dem Stützabstand der Kabelbahnen entspricht und der z.B. im Bereich von 1.5 m - 2.5 m liegt. Nach Abschluss dieses Arbeitsgangs bzw. der Fertigstellung der Montageplattform kann das Gebäude gereinigt werden, wonach die Installationsvorrichtungen und Leitungen in sauberer Umgebung montiert bzw. installiert werden können. Zu beachten ist, dass für die Realisierung der Montageplattform in einem separaten Arbeitsgang eine hohe Flexibilität der Deckenmontagevorrichtung erforderlich ist. Dazu sind die Deckenstützen entlang den Querprofilen verschiebbar. Die Kabelbahn können daher selbst dann exakt entlang einer gerade ausgerichtet werden, wenn die Querprofile nicht präzise montiert wurden. Die erfindungsgemässe Deckenmontagevorrichtung erfüllt daher nicht nur funktionale sondern auch ästhetische Anforderungen optimal.

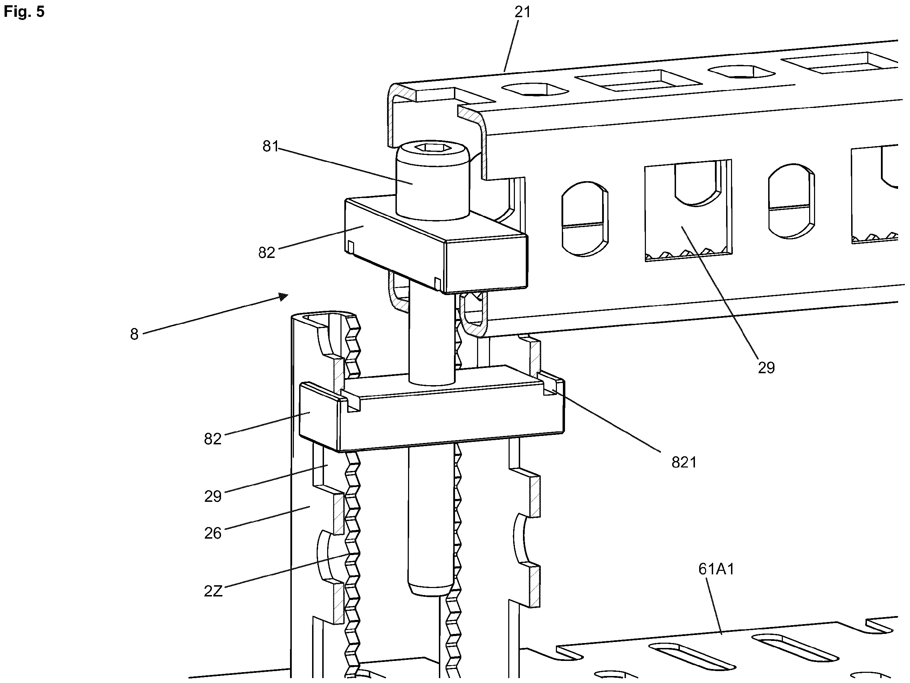

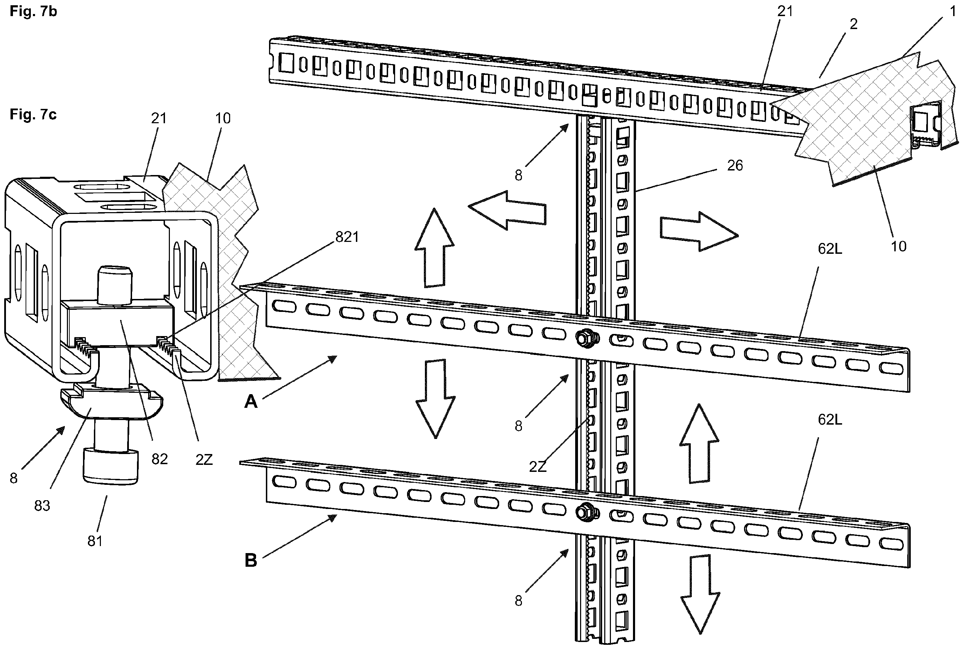

Bevorzugt werden die Querprofile in der Gebäudedecke integriert oder eingegossen. Wie dies in Fig. 5 und insbesondere Fig. 7b gezeigt ist, können Elemente von Verbindungsgarnituren in die integrierten Querprofile eingehängt werden, um ein Montageprofil bzw. eine Deckenstütze zu montieren. Besonders vorteilhaft dabei ist, dass die Montageprofile einerseits mit wenigen Handgriffen montierbar sind und andererseits entlang dem Querprofil zu einer passenden Position verschiebbar sind, bevor sie vorzugsweise durch Festziehen einer Schraube fixiert werden. Möglich ist grundsätzlich auch das Einhängen der Montageprofile, die durch die gehaltene Last fixiert werden.

Vorteilhaft ist ferner, dass die Montageplattform mit einfachen Massnahmen erweitert werden kann, ohne dass Bohrungen in der Decke vorzunehmen sind. Beispielsweise werden gegebenenfalls verkürzte Längsprofile oder Querprofile seitlich an die Montageplattform angekoppelt, sodass weitere Verbindungsmöglichkeiten mit der Montageplattform resultieren. Falls bei der Erstinstallation beispielsweise nur eine Deckenstütze montiert wurde, so kann bei einer Nachinstallation, falls notwendig, das Querprofil verlängert und mit einer weiteren Deckenstütze verbunden werden. Vorteilhaft ist wiederum, dass die bereits installierte Deckenstütze und die neue Deckenstütze bedarfsweise gegeneinander verschoben werden können, um einen gewünschten Abstand zwischen den Kabelbahnen einzustellen. Zudem ist es bei Nachinstallationen möglich, eine gesamte Kabelbahn seitlich zu verschieben, um bequem Zugang zur benachbarten Kabelbahn zu erhalten. Die entsprechenden Arbeiten können wiederum in getrennten Arbeitsgängen durchgeführt werden. Eine erste Arbeitsgruppe kann die Kabelbahnen gegeneinander verschieben und eine zweite Arbeitsgruppe kann sich der Installation der Leitungen widmen.

Die Montageplattform kann beliebig dimensioniert rasch an der Decke montiert werden. Vorzugsweise werden Montagepunkte für die Querprofile vorbestimmt und an der Gebäudedecke optisch markiert. Die Montagepunkte, werden vorzugsweise mittels einer Laservorrichtung festgelegt, die zumindest den Ursprung eines Koordinatensystems und vorzugsweise auch deren Achsen bestimmt. An den markierten Stellen werden Verbindungsvorrichtungen, z.B. Segmentanker, eingesetzt, mittels denen die Querprofile mit der Decke verbunden werden.

Die Verbindungspunkte sowie die Dimensionen der Elemente der Montageplattform werden in einem Rechner bzw. einer Datenbank erfasst, wonach einerseits der Verlauf der Montageplattform im Gebäude rechnerisch erfasst ist und andererseits Koordinaten der Montageplattform selbst bestimmt und zur Montage der Installationsvorrichtungen vorgegeben werden können. Die Montage der Installationsvorrichtungen und der Verlauf der zu installierenden Leitungen kann somit elektronisch simuliert und definitiv festgelegt und zur Realisierung freigegeben werden. Für alle Installationsvorrichtungen können in der Folge Koordinaten zur Montage individuell festgelegt werden. Die Installationsdaten werden ausgedruckt oder elektronisch auf das Computer Endgerät des Installateurs übermittelt.

Nach der Erstinstallation sind daher nicht nur der exakte Verlauf der Montageplattform im Gebäude sowie die Abmessungen der Montageplattform, sondern auch die gesamte Erstinstallation mit den Installationsvorrichtungen und den installierten Leitungen rechnerisch erfasst, weshalb Nachinstallationen, Wartungsarbeiten sowie Reparaturen einfach ausgeführt werden können. Eine defekte Leitung kann mit geringem Aufwand lokalisiert und ausgetauscht werden. Ebenfalls, können Koordinaten für Installationsvorrichtungen, die für eine Nachinstallation benötigt werden, in einfacher Weise festgelegt werden.

Die Deckenmontagevorrichtung kann ganzflächig und/oder streifenförmig z.B. entlang einer Wand an der Decke montiert werden oder streifenförmig entlang einer Gebäudedecke verlaufen und in einzelnen Gebäuderäumen die Gebäudedecke ganz oder teilweise abdecken.

Vorzugsweise ist vorgesehen, dass die Elemente der Montageplattform und die Installationsvorrichtungen durch einfache Montagegarnituren vorzugsweise formschlüssig miteinander verbunden und fixiert werden können. Dazu ist vorzugsweise vorgesehen, dass die Querprofile und gegebenenfalls vorhandene Längsprofile der Montageplattform ein Vierkant-Hohlprofil aufweisen und Seitenstücke umfassen, die an der Oberseite durch ein Mittelstück miteinander verbunden sind. Weiter ist vorzugsweise vorgesehen, dass das Mittelstück und die Seitenstücke zueinander korrespondierende Lochreihen mit wenigstens einer Art von Montageöffnungen aufweisen.

Vorzugsweise weisen die Seitenstücke an der Unterseite gegeneinander gerichtete, einen Längsschlitz begrenzende Fussstücke auf. Die Fussstücke sind vorzugsweise mit Zahnreihen versehen, die es erlauben, Installationsvorrichtungen an ausgewählter Position formschlüssig anzukoppeln.

Vorzugsweise weisen zumindest die Anschlussteile der Installationsvorrichtungen dasselbe Profil auf wie die Elemente der Montageplattform, sodass die Elemente der Montageplattform und die Elemente der Installationsvorrichtungen einfach miteinander verbunden werden können.

Da die Querprofile von der Gebäudedecke gehalten werden, müssen sie grundsätzlich nicht anderweitig miteinander verbunden werden. In vorzugsweisen Ausgestaltungen können die Querprofile hingegen durch Längsprofile ergänzt werden, um Profilrahmen zu bilden, die erweiterte Montagemöglichkeiten bieten. In die Profilrahmen können z.B. Blechwannen eingesetzt werden, an denen Installationsvorrichtungen montiert werden können. Die Querprofile können durch Längsprofile derart ergänzt werden, dass die Form einer Leiter oder eines Fischgrats resultiert. Derartige Formen können besonders einfach in die Gebäudedecke integriert bzw. ein betoniert werden. Damit die Querprofile innerhalb der Gebäudedecke sicher gehalten werden, werden vorzugsweise Flanschelemente vorgesehen. Beispielsweise werden Flügelelemente ausgeschnitten und nach aussen gebogen. Die Öffnungen der Seitenwände können nach innen versetzt sein, sodass ein einhängen von Kopplungselementen noch immer möglich ist. Die Querprofile werden vor dem Einbetonieren vorzugsweise mit einer Folie versehen, welche verhindert, dass Material durch Öffnungen in die Querprofile eintreten kann. Bei Querprofilen, die in die Gebäudedecke integriert werden, kann unter Umständen auch auf Wandöffnungen verzichtet werden.

Ausgehend von der installierten Montageplattform können verschiedenartige Strukturen der Deckenmontagevorrichtung realisiert werden, die eine oder mehrere Montageebenen aufweisen. Besonders vorteilhaft ist wiederum, dass die Möglichkeit besteht, die Installationsvorrichtungen gegeneinander oder bezüglich der Montageplattform bedarfsweise zu verschieben. Die Montageprofile oder Deckenstützen können mit beliebigen Horizontalauslegern verbunden werden. Besonders vorteilhaft sind Horizontalausleger mit einem L-Profil, die kostengünstig gefertigt werden und eine hohe Last aufnehmen können.

In einer besonders vorzugsweisen Ausgestaltung umfasst die Deckenmontagevorrichtung mehrere Verkehrswege, die zumindest an einem Ort eine Schnittstelle bilden, an der ein Verteilraum gebildet wird, innerhalb dessen die in den Kabelbahnen geführten Leitungen umverteilt werden können.

Nachfolgend wird die Erfindung anhand von Zeichnungen näher erläutert. Dabei zeigt:
- Fig. 1: eine erfindungsgemässe Deckenmontagevorrichtung 1, die eine an einer Gebäudedecke 10 montierte Montageplattform 2, die eine Vielzahl von Querprofilen 21 umfasst, die in der vorliegenden Ausgestaltung durch Längsprofile 22 miteinander verbunden sind und an denen Installationsvorrichtungen, wie Montagestützen 26 für Horizontalausleger 62 und Kabelbahnen 61, sowie Rohrschellen 64 mittels Kopplungsgarnituren 8 montierbar sind;
- Fig. 2a: den durch Querprofile 21 und Längsprofile 22 gebildeten Profilrahmen der Montageplattform 2 von Fig. 1, der eine Blechwanne 5 trägt;
- Fig. 2b: eine Ecke des Profilrahmens von Fig. 2a mit einem kreuzförmigen Kopplungsteil 3, das zugeordnete Querprofile 21 und Längsprofile 22 miteinander verbindet und das durch ein Verbindungselement 4 mit der Gebäudedecke verbunden wird;
- Fig. 3: einen Teil der Montageplattform 2 von Fig. 1 in optionaler Ausgestaltung mit Querprofilen 21 und Längsprofilen 22, die durch Kopplungsteile 3 gemäss Fig. 2b sowie Arretierelemente 91, 92, wie Schrauben, Gewindestangen oder Gewindebolzen, miteinander verbunden werden sowie eine Kopplungsgarnitur 8, mittels der eine Installationsvorrichtung an die Montageplattform 2 bzw. an ein Querprofil 21 ankoppelbar ist;
- Fig. 4: eine Deckenmontagevorrichtung 1 mit einem der Querprofile 21 der Montageplattform 2, an dem ein Montageprofil 26 montiert ist, welches in zwei Ebenen A, B beidseits mit konventionellen Horizontalauslegern 62 verbunden ist, auf denen Kabelbahnen 61 abgelegt sind;
- Fig. 5: das Querprofil 21 und das Montageprofil 26 von Fig. 4 in Schnittdarstellung mit freigelegter Verbindungsgarnitur 8;
- Fig. 6: die Deckenmontagevorrichtung 1 von Fig. 4 mit zwei Querprofilen 21;
- Fig. 7a: die Deckenmontagevorrichtung 1 von Fig. 4 mit einem in der Gebäudedecke 10 einbetonierten Querprofil 21 und einem damit verbundenen Montageprofil 26, dessen Mittelstück mit L-Profil-förmigen Horizontalauslegern 26L verbunden ist;
- Fig. 7b: die Deckenmontagevorrichtung 1 von Fig. 7b mit dem in der Gebäudedecke 10 einbetonierten Querprofil 21 und dem damit verbundenen Montageprofil 26, dessen Hakenreihen 2Z die Horizontalausleger 26L an ausgewählter Position halten;
- Fig. 7c: das vorzugsweise in die Gebäudedecke 10 einbetonierte Querprofil 21 mit einer Verbindungsgarnitur 8, die mit einem ersten Kopplungselement 82 in die Zahnreihen 2Z des Querprofils 21 eingehängt ist und mit einem zweiten Kopplungselement 83, das z.B. in ein Montageprofil 26 gemäss Fig. 7b eingehängt ist; und
- Fig. 8: eine erfindungsgemässe Deckenmontagevorrichtung 1 mit einer Montageplattform 2, die einem ersten Verkehrsweg x zugehörige Querprofile 21 und einem zweiten Verkehrsweg y zugehörige Querprofile 21 sowie in zwei Ebenen A, B angeordnete Kabelbahnen 61 aufweist, die stirnseitig an einen Verteilraum V angrenzen, innerhalb dessen die in den Kabelbahnen 61 geführten Kabel K zwischen den Kabelbahnen 61 umverteilbar sind.

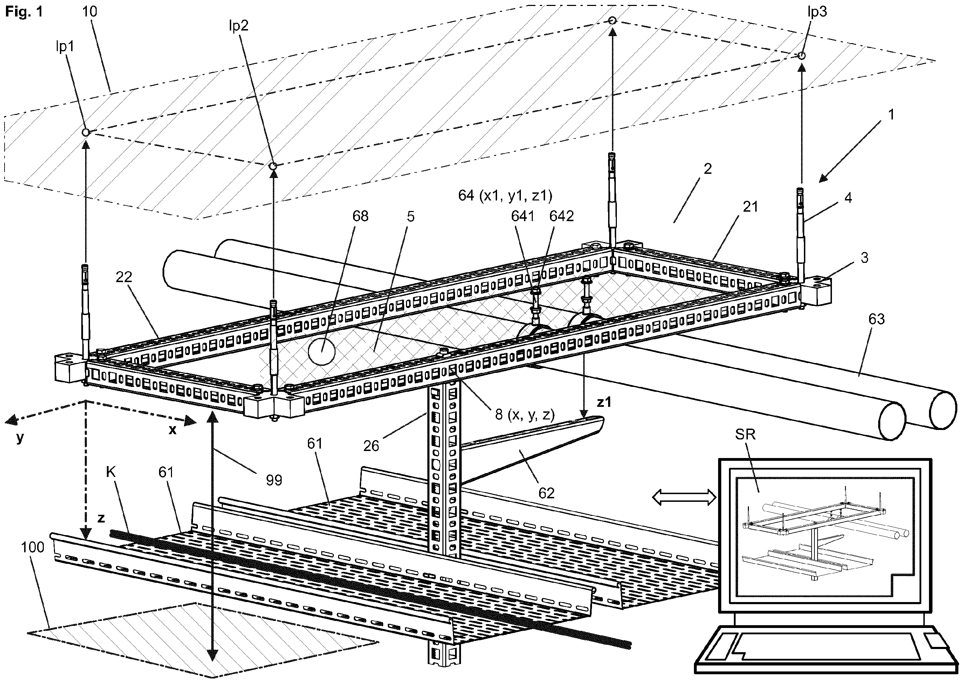

Fig. 1 zeigt eine erfindungsgemässe Deckenmontagevorrichtung 1 mit einer an einer Gebäudedecke 10 montierten Montageplattform 2, an der Installationsvorrichtungen, wie Deckenstützen 26, Horizontalausleger 62, Kabelbahnen 61, Rohrschellen 64 und eine abgehängte Decke 100, montiert bzw. montierbar sind.

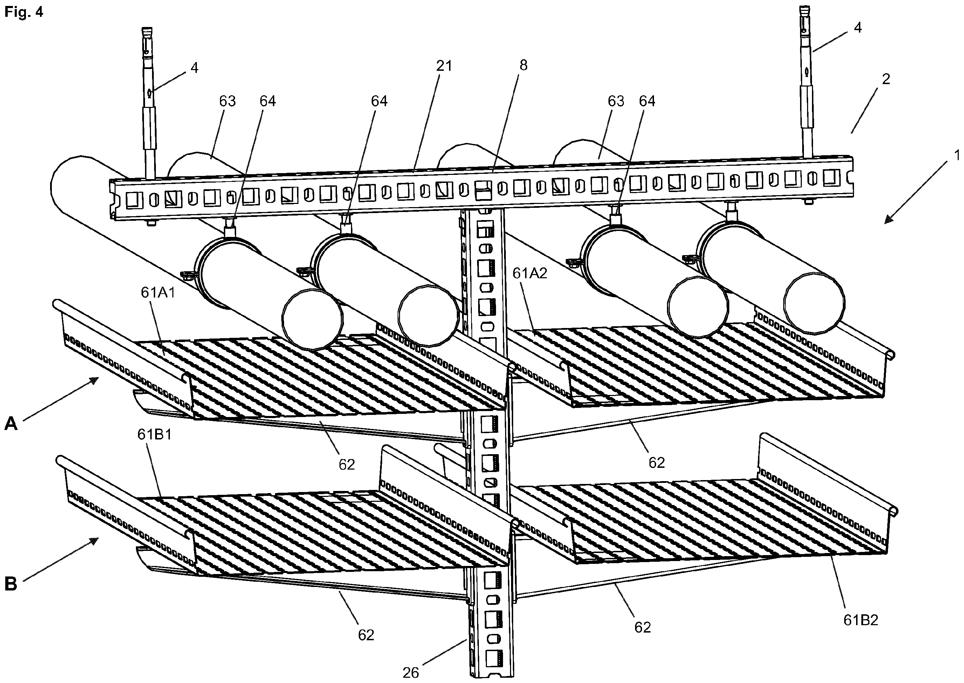

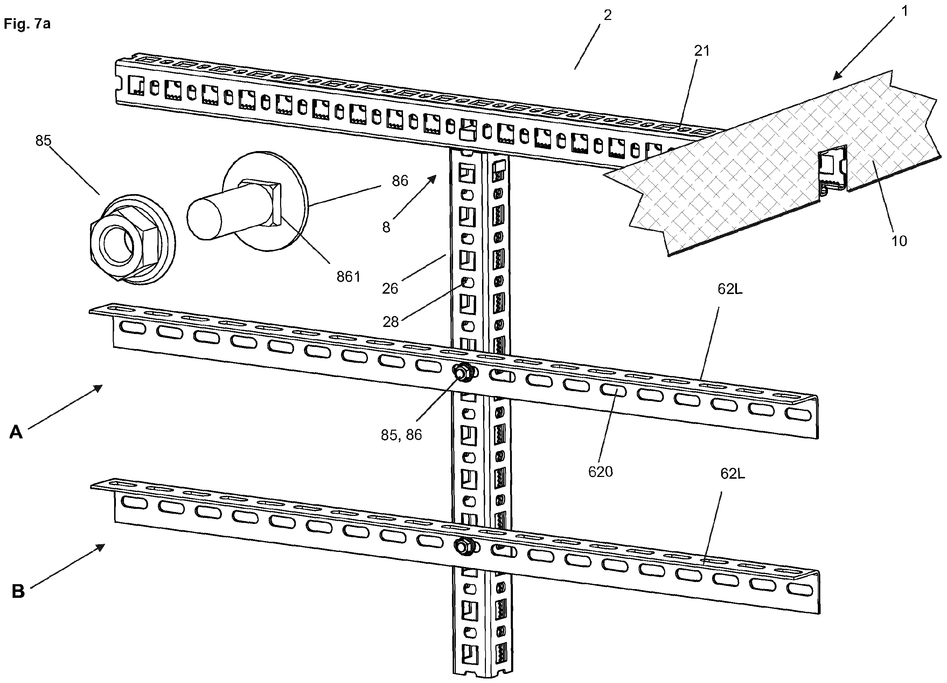

Die Montageplattform 2 umfasst Querprofile 21, die quer zum Verkehrsweg x angeordnet sind, entlang dem Leitungen, wie Kabel K und Rohre 63, verlegt sind. Die Querprofile 21 sind durch Installationsdistanzen voneinander beabstandet entlang dem Installationsweg angeordnet an oder in der Gebäudedecke 10 verankert. Der Abstand zwischen den Querprofilen 21 ist z.B. entsprechend den Stützabständen gewählt, die für die Kabelbahnen 61 vorgegeben sind. Die Installationsdistanzen liegen typischerweise im Bereich von 1.5 bis 2.5 m. Wie dies in Fig. 1 oder in Fig. 4 gezeigt ist, sind die Querprofile 21 z.B. durch Dübel oder Segmentanker 4 mit der Gebäudedecke 10 verbunden. In besonders bevorzugten Ausgestaltungen werden die Querprofile 21 in die Gebäudedecke 10 eingegossen, wie dies z.B. in Fig. 7a gezeigt ist.

Die montierten oder eingegossenen Querprofile 21 werden schrittweise oder besonders vorteilhaft nach Fertigstellung der Montageplattform 2 durch formschlüssige Verbindungen oder Schraubverbindungen mit Installationsvorrichtungen verbunden werden. Jedes der Querprofile 21 ist dabei durch eine Verbindungsgarnitur 8 mit wenigstens einem vertikal ausgerichteten Montageprofil 26 verbunden, das unterhalb der Montageplattform durch eine formschlüssige Verbindung oder eine Schraubverbindung beidseits mit horizontal ausgerichteten Horizontalauslegern 62 verbunden ist. Auf den unteren beiden Horizontalauslegern 62 (nicht sichtbar) ist je eine Kabelbahn 61 abgelegt. In den Kabelbahnen 61 sind Leitungen K abgelegt. Für das zweite Querprofil 21 ist das Montageprofil 26 nicht gezeigt.

In der gezeigten Ausgestaltung sind die Querprofile 21 durch Längsprofile 22 zu einem Profilrahmen ergänzt. Die Querprofile 21 und Längsprofile 22 sind durch Kopplungsteile 3 miteinander verbunden, in die Verbindungsteile bzw. Segmentanker 4 eingesetzt sind, die in der Gebäudedecke 10 verankert werden. Die Montageplattform 2 besteht vorzugsweise aus einer Vielzahl von solchen Profilrahmen, die entlang einem Installationsweg aneinander anschliessen. Längsprofile 22 werden jedoch nur dann vorgesehen, wenn erweiterte Installationsmöglichkeiten erforderlich sind. Ansonsten werden für die Montageplattform 2 nur Querprofile 21 montiert zu montieren.

Sofern die Montageplattform 2 nicht in die Gebäudedecke 10 integriert bzw. eingegossen wird, werden zur Montage der Montageplattform 2 an der Gebäudedecke 10 Montagepunkte lp1, lp2, lp3, ... markiert, an denen Bohrungen vorgesehen und die Verbindungsteile 4, z.B. Segmentanker, befestigt werden. Die Montagepunkte lp1, lp2, lp3, ... werden z.B. mittels einer Laservorrichtung markiert, sodass die Montageplattform 2 und somit die Deckenmontagevorrichtung 1 im Gebäude präzise positioniert ist. Die Koordinaten der Montagepunkte lp1, lp2, lp3, ... werden vorzugsweise in einem Rechner SR registriert. Vorzugsweise werden in der Folge auch die Abmessungen der Montageplattform 2 und der Teile der Installationsvorrichtungen 26, 61, 62, 63, 64, insbesondere der Montageprofile oder Deckenstützen 26, der Kabelbahnen 61 von Rohren 63 und Rohrschellen 64, sowie deren Montagepositionen erfasst. Möglich ist ferner, dass Koordinaten der Montageplattform 2 erfasst werden, die sich auf einen Bezugspunkt oder Ursprungspunkt der Montageplattform 2 beziehen. D.h., der Rechner kann Montagepunkte optional in Bezug auf wenigstens einen Bezugspunkt des Gebäudes und/oder optional in Bezug auf wenigstens einen Bezugspunkt der Montageplattform 2 festlegen und für die Montage von Installationsvorrichtungen vorgeben.

Der Rechner SR kann individuelle Installationswege für alle Leitungen und Montagepunkte für die Verbindung mit der Montageplattform 2 festlegen. Exemplarisch wurde festgelegt, dass am Montagepunkt x-y-z eine Montagestütze 26 mittels einer Kopplungsgarnitur 8 mit der Montageplattform 2 verbunden wird. In der Folge wurden beidseits der Montagestützen 26 auf der Höhe z parallel zur x-Achse verlaufende Kabelbahnen 61 montiert. Der obere Horizontalausleger 62 wurde auf der Höhe z1 montiert.

Sofern für eine Nachinstallation eine weitere Kabelbahn 61 erforderlich ist, kann mittels des Rechners SR ein freier Installationsweg ermittelt werden. Z.B. wird festgestellt, dass auf der Ebene mit dem z-Koordinaten z1 Raum für eine entsprechende Installation vorhanden ist. In der Folge wird dort ein Horizontalausleger 62 montiert, auf den eine weitere Kabelbahnen 61 aufgelegt werden kann. Die Installation und Nachinstallation aller Installationsvorrichtungen kann somit anhand des Rechners SR geplant werden. Vorzugsweise werden auch alle installierten bzw. von Installationsvorrichtungen gehaltenen Medienleitungen, z.B. die Rohre 63, im Rechner SR registriert, sodass die Medienleitungen z.B. für Wartungsarbeiten leicht identifizierbar sind.

In Fig. 7b ist illustriert, dass die Deckenmontagevorrichtung 1 eine hohe Flexibilität aufweist und praktisch alle Installationsvorrichtungen relativ zur Montageplattform 2 verschoben werden können. Dies ist besonders vorteilhaft, da normalerweise erst nach Auflegen der Kabelbahnen und insbesondere später zum Zeitpunkt einer Nachinstallation die Dimensionen der weiter zu montierenden Installationsvorrichtungen bekannt sind.

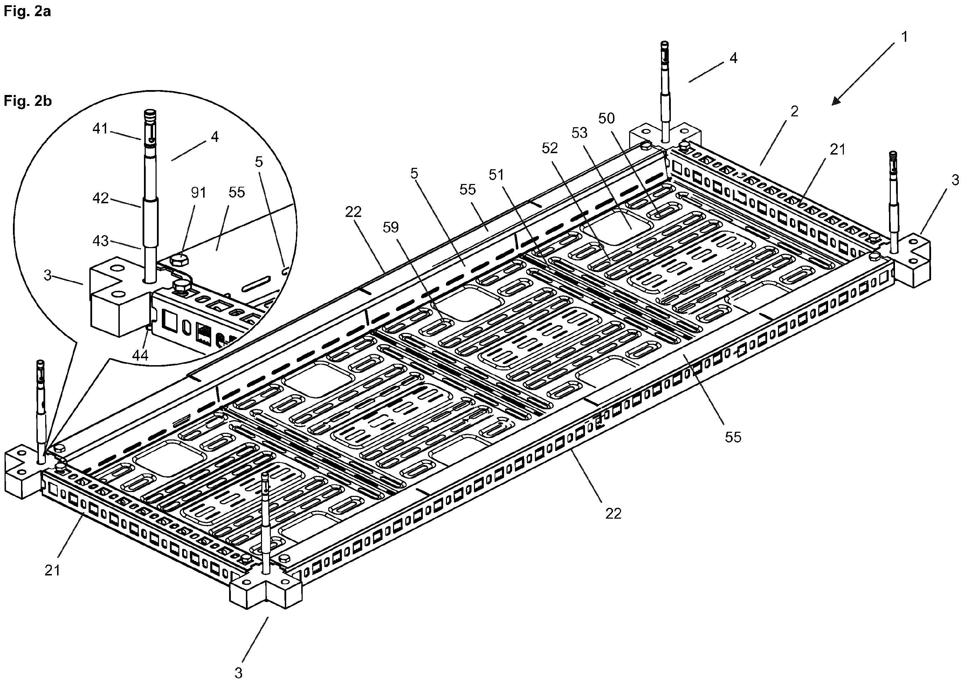

In die Montageplattform 2 ist ferner eine Blechwanne 5, wie sie in Fig. 2a gezeigt ist, eingesetzt, mittels der weitere Installationsmöglichkeiten gegeben sind. Mit der Blechwanne 5 sind zwei Rohrschellen 64 mittels Gewindestangen 642 und Schraubenmuttern 641 in Montageöffnungen 50 (siehe Fig. 2a) der Bodenplatte 5 gehalten. Für eine der Rohrschellen 64 sind die Koordinaten der Montageposition (x1, y1, z1) angegeben. Von den Rohrschellen 64 werden Rohre 63 gehalten. Fig. 4 zeigt, dass die Rohrschellen 64 und weitere Installationsvorrichtungen auch vorteilhaft auf mit dem Querprofil 21 verbunden werden können, was dessen Nutzen weiter bestätigt. Zudem ist eine elektrische Vorrichtung 68, z.B. eine Beleuchtungsvorrichtung oder eine Anschlussvorrichtung, in eine freigelegte Montageöffnung in der Blechwanne 5 eingesetzt. Mit Verbindungsmitteln 99, z.B. Seilen, welche in die Fussstücke 2Z der Querprofile 21 und Längsprofile 22 eingehängt sind, ist eine abgehängte Decke 100 gehalten.

Schwere Lasten werden vorzugsweise direkt mit der Montageplattform 2 gekoppelt, während kleinere Lasten vorteilhaft von der Blechwanne 5 aufgenommen werden können.

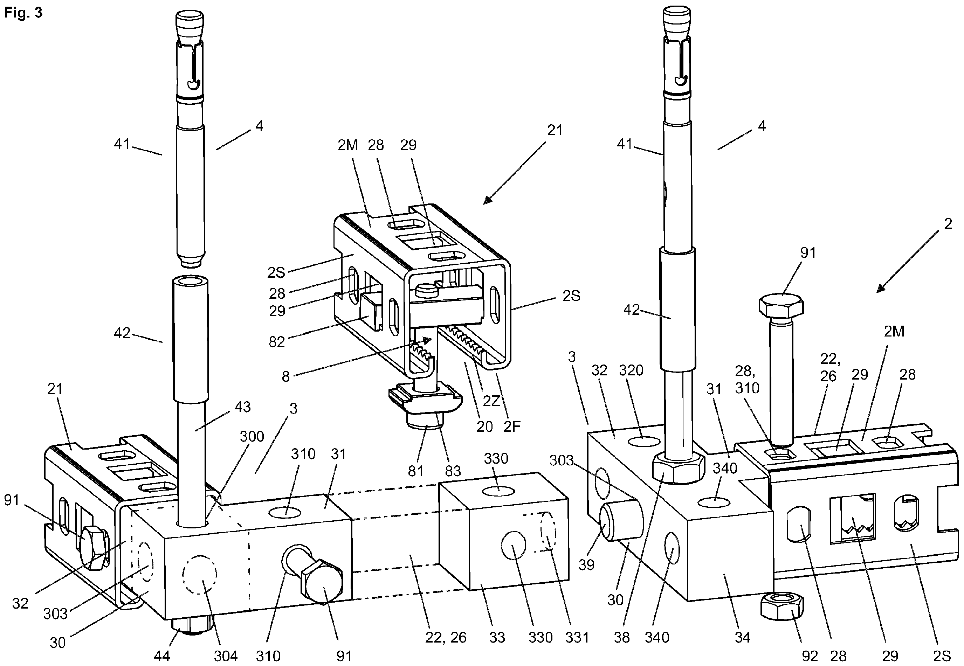

Nach der Installation der Montageplattform 2 werden alle Installationsvorrichtungen an der Montageplattform 2 montiert. Auf weitere Bohrungen in der Gebäudedecke 10 kann verzichtet werden. Bedarfsweise kann die Montageplattform 2 erweitert werden, ohne dass erneute Bohrungen in der Gebäudedecke 10 erforderlich sind. Kopplungsvorrichtungen 3 zum Ausbau der Montageplattform 2 sind in Fig. 3 gezeigt.

Unterhalb der Montageplattform 2 ist ein Installationsraum vorgesehen, in dem die Installationsvorrichtungen gegebenenfalls auf mehreren Ebenen montierbar sind.

Fig. 2a zeigt den durch Querprofile 21 und Längsprofile 22 gebildeten Profilrahmen der Montageplattform 2 von Fig. 1, in den die Blechwanne 5 eingesetzt ist, die welche eine Bodenplatte 59 und beidseits daran vorgesehene Flanschelemente 55 umfasst, die winkelförmig ausgebildet sind und auf den Längsprofilen 22 ruhen.

In die Bodenplatte 59 sind vorzugsweise Quersicken 51 und Längssicken eingeformt oder eingeprägt, mittels denen die Tragfähigkeit der Bodenplatte 59 erhöht wird.

Ferner sind in der Bodenplatte 59 zahlreiche Montageöffnungen 50 mit Auskragungen vorgesehen, die die Steifigkeit der Bodenplatte 59 weiter erhöhen und die gleichzeitig die Möglichkeit zur Durchführung von Montageschrauben bieten.

Weiterhin sind mehrere Montagezonen 53 vorgesehen, die peripher durch Perforationen begrenzt sind. Diese Perforationen können aufgebrochen werden, um Montageöffnungen freizulegen, in die Geräte und Vorrichtungen eingesetzt werden können. Die Montageplattform 2 besteht aus einem einzelnen Profilrahmen der durch zwei Querprofile 21 und zwei Längsprofile 22 gebildet wird, die durch Kopplungsteile 3 miteinander verbunden sind.

Fig. 2b zeigt eine Ecke der Montageplattform 2 mit dem betreffenden Kopplungsteil 3, das vom Verbindungsteil 4 gehalten ist und das durch Arretierschrauben 91 mit den zugewandten Enden je eines der Querprofile 21 und Längsprofile 22 verbunden ist. Das Längsprofil 22 ist durch das Flanschelement 55 der eingesetzten Blechwanne 5 abgedeckt, das durch die Arretierschraube 91 fixiert ist.

Das Verbindungsteil 4 umfasst einen Segmentanker 41, der in der Decke 10 (siehe Fig. 1) des Gebäudes verankert wird und der in dieser vorzugsweisen Ausgestaltung durch eine Gewindehülse 42 mit einer Gewindestange 43 verbunden ist, die das Kopplungsteil 3 durchstösst und unterhalb des Kopplungsteils 3 mit einer Schraubenmutter 44 verbunden ist. Durch Drehen der Gewindehülsen der Verbindungsteile 4 kann die Montageplattform 2 an der Gebäudedecke 10 nivelliert werden.

Fig. 3 zeigt einen Teil der Montageplattform 2 von Fig. 1 mit Querprofilen 21 und Längsprofilen 22 oder Montageprofilen 26, die durch Verbindungsgarnituren bzw. Arretierschrauben 91 und gegebenenfalls Schraubenmuttern 92 mit Kopplungsteilen 3 verbunden werden. Die Querprofile 21 und Längsprofile 22 oder Montageprofile 26 sind vorzugsweise identisch ausgestaltet und können von einem vorgefertigten Profilteil in der gewünschten Länge abgeschnitten werden. Mittels der Kopplungsteile 3 kann die Montageplattform 2 beliebig ausgebaut werden, ohne dass hinzugefügte Querprofile 21 oder Längsprofile 22 in der Decke verankert werden müssen. Die Kopplungsteile 3, z.B. in der Ausgestaltung eines "T", können ferner dazu benutzt werden, zwei Querprofile 21 miteinander zu verbinden und dazwischen ein Montageprofil 26 anzuschliessen.

Die Querprofile 21 und Längsprofile 22 oder Montageprofile 26 weisen ein Vierkant-Hohlprofil auf und umfassen Seitenstücke 2S, die an der Oberseite durch ein Mittelstück 2M miteinander verbunden sind und die an der Unterseite gegeneinander gerichtete, einen Längsschlitz 20 begrenzende Fussstücke 2F aufweisen. Das Mittelstück 2M und die Seitenstücke 2S weisen zueinander korrespondierende Lochreihen mit zwei Arten von Montageöffnungen 28; 29 auf. Kleinere gerundete Montageöffnungen 28 alternieren mit grösseren quadratischen Montageöffnungen 29 in regelmässigen Abständen voneinander.

Die Enden der Fussstücke 2F sind um 90° nach oben gegen das Mittelstück 2M gebogen und mit einer Verzahnung 2Z versehen. Die Querprofile 21 und Längsprofile 22 sind mit dem Längsschlitz 20 nach unten geöffnet, sodass Verbindungsteile oder Kopplungsteile in die Hohlprofile der Querprofile 21 und Längsprofile 22 eingeführt und in die Montageöffnungen 28; 29 der Seitenstücke 2S oder des Mittelstücks 2M eingesetzt oder in die Fussstücke 2F oder Verzahnungen 2Z eingehängt werden können.

Fig. 3 zeigt exemplarisch eine Kopplungsgarnitur 8, die mit einem ersten Kopplungselement 82 in einander gegenüberliegende Montageöffnungen 29 der Seitenwände 2S eines Querprofils 21 eingreift und durch eine Schraube 81 mit einem zweiten Kopplungselement 83 verbunden ist, welches formschlüssig z.B. mit dem Mittelstück 2M eines Montageprofils 26 verbindbar ist. Das erste Kopplungselement 82 ist beidseitig in quadratische Montageöffnungen 29 eingeführt werden und überragt diese mit Schulterelementen, in denen eine Aufnahmenut vorgesehen ist. Fig. 7c zeigt, dass das erste Kopplungselement 82 auch schmaler ausgebildet sein kann, sodass die Verzahnungen 2Z in den Aufnahmenuten aufgenommen werden können. Die ersten und zweiten Kopplungselemente 82, 83 können identisch ausgebildet oder individuell an die zugeordneten Querprofile 21 oder Installationsvorrichtungen angepasst sein.

Fig. 3 zeigt zwei Kopplungsteile 3 in vorzugsweisen Ausgestaltungen. Das rechts gezeigte Kopplungsteil 3 weist vier Kopplungsflügel 31, 32, 33 und 34 auf, von denen jedes mit wenigstens einer vertikal oder horizontal verlaufenden Aufnahmeöffnung, Bohrung oder Gewindebohrung 310, 320, 330, 340 versehen, gegebenenfalls durchstossen ist. Vorzugsweise sind zwei Gewindebohrungen vorgesehen, die jeden Kopplungsflügel 31, 32, 33 und 34 kreuzweise durchlaufen.

Der Kopplungsflügel 31 wird in ein Querprofil 21, Längsprofil 22 oder Montageprofil 26 eingefügt, wonach die Arretierschraube 91 durch eine Montageöffnung 28 in wenigstens einem Seitenstück 2S oder im Mittelstück 2M des betreffenden Profils 21, 22, 26 in die Bohrung oder Gewindebohrung 310 eingeschraubt oder hindurch geführt und auf der anderen Seite mit einer Schraubenmutter 92 verbunden wird. Der Kopplungsflügel 31 ist in der Folge innerhalb des betreffenden Profils 21, 22, 26 axial unverschiebbar und drehfest gehalten. Der Querschnitt des Kopplungsflügels 31 entspricht in vorzugsweisen Ausgestaltungen dem Querschnitt des Hohlprofils des betreffenden Profils 21, 22, 26, sodass der Kopplungsflügel 31 spielfrei gehalten ist.

In Fig. 3 ist illustriert, dass das rechts dargestellte Kopplungsteil 3 ein Zentralstück 30 aufweist, das einstückig mit drei Kopplungsflügeln 31, 32, 34 verbunden ist und durch einen Gewindebolzen 39, der in eine Gewindebohrung 303 im Zentralstück 30 eingesetzt ist, lösbar mit einem vierten Kopplungsflügel 33 verbindbar ist.

Das Zentralstück 30 eines Kopplungsteils 3 kann daher fest oder lösbar mit einem oder mehreren Kopplungsflügeln 31, 32, 33, 34 verbunden sein. Beispielsweise wird ein würfelförmiges Zentralstück 30 verwendet, welches auf einer, zwei drei oder vier Seiten mit Gewindebohrungen 301, 302, 303, 304 (301, 302 nicht gezeigt) versehen ist, von denen jeweils die gegenüberliegenden Gewindebohrungen 301, 303; 302, 304 vorzugsweise koaxial zueinander ausgerichtet sind. In gleicher Weise kann das Kopplungsteil 3 zusätzlich oben und/oder unten mit einem Kopplungsflügel versehen sein, mittels dessen eine Deckenstütze oder ein Montageprofil 26 montierbar ist.

Links ist ein winkelförmiges Kopplungsteil 3 gezeigt, welches nur zwei Kopplungsflügel 31, 32 aufweist, die einen Winkel von 90° einschliessen. Mit strichpunktierten Linien ist gezeigt, dass das Zentralstück 30 in vorzugsweiser Ausgestaltung würfelförmig ausgebildet und mit den beschriebenen Gewindebohrungen 301, 302, 303, 304 versehen sein kann. Auf verschiedenen Seiten des Zentralstücks 30 können daher Gewindebolzen 39 in die Gewindebohrungen 301, 302, 303, 304 eingedreht werden, um ein Kopplungsteil 3 mit einem, zwei, drei oder vier Kopplungsflügeln 31, 32, 33, 34 zu realisieren, die Winkel von plus 90°, minus 90° oder 180° einschliessen.

Ein Gewindebolzen 39 wird z.B. bis zum Anschlag festgezogen, wonach der zugehörige Kopplungsflügel 31, 32, 33 oder 34, der eine korrespondierende Gewindebohrung 311, 321, 331, 341 aufweist (311, 321, 341 nicht gezeigt), mit dem Gewindebolzen 39 verbunden wird. Sobald die Kopplungsflügel 31, 32, 33, 34 in das zugehörige Querprofil 21, Längsprofil 22 oder Montageprofil 26 eingesetzt sind, werden sie drehfest gehalten, sodass sie sich nicht mehr vom Zentralstück 30 lösen können und praktisch automatisch arretiert sind. Beispielsweise können Montageprofile 26 mittels L-förmiger Kopplungsteile 3 beidseits an einem Querprofil 21 befestigt werden.

Kopplungsteile 3 sind daher vorzugsweise modular aufgebaut, sodass sie mit wenigen Handgriffen an die aktuellen Bedürfnisse angepasst werden können. Ein weiterer Vorteil der Verwendung von modularen Kopplungsteilen 3 mit Gewindebolzen 39 ist, dass jeder lösbar vorgesehene Kopplungsflügel 31, 32, 33, 34 durch Drehung um den Gewindebolzen 39 axial verschoben werden kann, um eine Übereinstimmung seiner Bohrung, gegebenenfalls Gewindebohrung 310, 320, 330, 340 mit einer entsprechenden Montageöffnung 28, 29 des zugeordneten Querprofils 21 oder Längsprofils 22 zu erreichen.

Das Zentralstück 30 weist eine vorzugsweise mit einem Gewinde versehene Zentralbohrung 300 auf, die das Zentralstück 30 vertikal teilweise oder ganz durchläuft. Das Verbindungsteil 4, welches auf der Unterseite einen Gewindebolzen oder eine Gewindestange 43 aufweist, kann daher in die Gewindebohrung 300 eingeschraubt oder durch die Zentralbohrung 300 hindurch geführt werden. Auf der rechten Seite ist die Gewindestange oder der Gewindebolzen 43 in die Zentralbohrung 300 eingeschraubt und mittels einer Kontermutter 38 fixiert. Auf der linken Seite ist die Gewindestange 43 durch die Zentralbohrung 300 hindurch geführt und auf der Unterseite mit einem Bolzenkopf oder mit einer Schraubenmutter 44 versehen.

Fig. 4 zeigt eine Deckenmontagevorrichtung 1 mit einem der Querprofile 21 der Montageplattform 2, an dem vier Rohrschellen 64 und ein Montageprofil 26 montiert sind. Das Querprofil 21 ist nach unten geöffnet, sodass Installationsvorrichtungen an passender Stelle in die Verzahnungen 2Z eingehängt und gegebenenfalls fixiert werden können. Am Montageprofil 26 sind beidseits in zwei Ebenen A, B konventionelle Horizontalausleger 62 befestigt, auf denen Kabelbahnen 61 abgelegt sind. Die oberen beiden Kabelbahnen 61A1 und 61A2 sind in der ersten Ebene A gehalten. Die unteren beiden Kabelbahnen 61B1 und 61B2 sind in der zweiten Ebene B gehalten. Die Positionen der Kabelbahnen 61A1, 61A2 und 61B1, 61B2 sind exakt definiert und können im Rechner SR (siehe Fig. 1) entsprechend registriert werden. Das Querprofil 21 ist mit Segmentankern 4 mit der Gebäudedecke und durch eine Verbindungsgarnitur 8 mit dem Montageprofil 26 verbunden.

Fig. 5 zeigt das Querprofil 21 und das Montageprofil 26 von Fig. 4 in Schnittdarstellung mit freigelegter Verbindungsgarnitur 8. Die beiden identisch ausgebildeten Kopplungselemente 82 sind in Fensteröffnungen 29 eingehängt und haben Ränder der Fensteröffnungen 29 in Aufnahmenuten 821 aufgenommen. Durch Festziehen der Verbindungsschraube 81 können die beiden Kopplungselemente 82 festgezogen werden, sodass das Querprofil 21 und das Montageprofil 29 stabil miteinander verbunden sind. Vorzugsweise sind grössere Fensteröffnungen 29 oder daran anschliessende Zugangsschlitze vorgesehen, die es erlauben, mit einem Werkzeug auf die Verbindungsschraube 81 zuzugreifen.

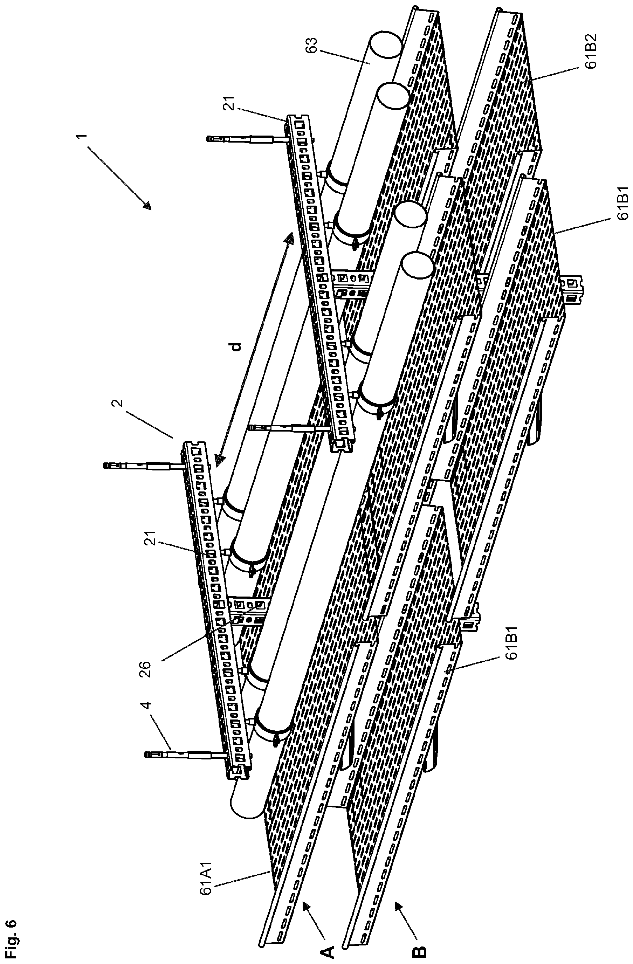

Fig. 6 zeigt die Deckenmontagevorrichtung 1 von Fig. 4 mit zwei Querprofilen 21, die um eine Installationsdistanz d voneinander beabstandet sind. Die Installationsdistanz wird entsprechend den Stützabständen gewählt, welche für die Kabelbahnen 61 vorgesehen sind.

Fig. 7a zeigt die Deckenmontagevorrichtung 1 von Fig. 4 mit einem vorzugsweise in der Decke einbetonierten Querprofil 21 und einem damit verbundenen Montageprofil 26. Das Mittelstück des Montageprofils 26 ist mit zwei L-Profil-förmigen Horizontalauslegern 26L verbunden. Zur Verbindung der Horizontalausleger 62L mit dem Montageprofil 26 ist eine Verbindungsgarnitur mit einer Schraube 86 und einer Schraubenmutter 85 vorgesehen. Die Schraube 86 weist anschliessend an den Schraubenkopf ein Rechteckprofil 861 auf, welches in den Längsöffnungen 28, 620 des Montageprofils 26 und des Horizontalauslegers 62L spielfrei gehalten ist. Der Horizontalausleger 62L bleibt dadurch horizontal ausgerichtet gehalten.

Die L-förmigen Horizontalausleger 62L sind einfach ausgestaltet und können trotzdem hohe Lasten aufnehmen und auf beiden Seiten mit der horizontal ausgerichteten Profilplatte eine Kabelbahn 61 stützen. Sofern hohe asymmetrische Lasten auftreten, können Stützelemente in das Montageprofil 26 eingesetzt werden. Durch die Verwendung derartiger Horizontalausleger 62L können die Kosten der Deckenmontagevorrichtung signifikant gesenkt werden, ohne dass funktionale Defizite zu verzeichnen sind.

Fig. 7b zeigt die Deckenmontagevorrichtung 1 von Fig. 7b mit dem in der Decke einbetonierten Querprofil 21 und dem damit verbundenen Montageprofil 26, dessen Hakenreihen 2Z die Horizontalausleger 26L an ausgewählter Position halten.

Fig. 7c zeigt das vorzugsweise in die Gebäudedecke 10 einbetonierte Querprofil 21 mit einer Verbindungsgarnitur 8, die mit einem ersten Kopplungselement 82 in die Zahnreihen 2Z des Querprofils 21 eingehängt ist und mit einem zweiten Kopplungselement 83, das z.B. in ein Montageprofil 26 gemäss Fig. 7b eingehängt ist. In gleicher Weise können die Horizontalausleger 62, 62L mit dem Montageprofil 26 verbunden werden. Das Kopplungselement 82 weist Aufnahmenuten 821 auf, in denen ebenfalls eine Verzahnung vorgesehen ist. Nachdem Festziehen der Verbindungsschraube 81 sind die Verzahnung 2Z des Querprofils 21 oder des Montageprofil 26 und die Verzahnung in der Aufnahmenut 821 des Kopplungselements 82 formschlüssig miteinander verbunden. Nach Lösen der Verbindungsschraube 81 kann das Montageprofil 26 daher entlang dem Querprofil 21 verschoben und wieder fixiert werden. Ebenso können die Horizontalausleger 62L vertikal verschoben und an passender Stelle fixiert werden.

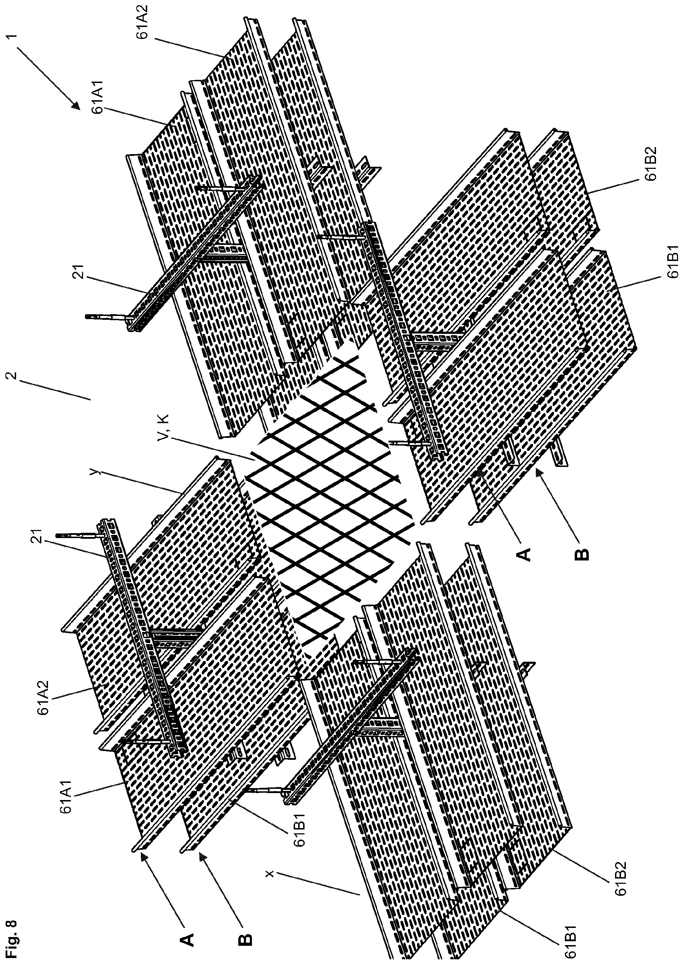

Fig. 8 zeigt eine erfindungsgemässe Deckenmontagevorrichtung 1 mit einer Montageplattform 2, die einem ersten Verkehrsweg x zugehörige Querprofile 21 und einem zweiten Verkehrsweg y zugehörige Querprofile 21 sowie in zwei Ebenen A, B angeordnete Kabelbahnen 61 aufweist. Die Kabelbahnen 61 grenzen stirnseitig an einen Verteilraum V an, innerhalb dessen die in den Kabelbahnen 61 geführten Kabel K zwischen den Kabelbahnen 61 in einfacher Weise umverteilt werden können. Entlang dem ersten Verkehrsweg x verlaufende Kabel K der ersten Kabelbahn 61B1 der unteren Ebene B können z.B. in die zweite Kabelbahn 61A2 der oberen Ebene A des zweiten Verkehrswegs y überführt werden. Innerhalb des Verteilraums V werden die Kabel K durch Zugkräfte und Eigenstabilität gehalten. Kabel und Leitungen K können auch vertikal nach unten weggeführt werden. Die erfindungsgemässe Deckenmontagevorrichtung 1 erlaubt es daher, Leitungen K unterschiedlicher Art entlang unterschiedlichen Verkehrswegen x, y zu führen und abzuzweigen.

## Patentansprüche

1. Deckenmontagevorrichtung (1) mit Installationsvorrichtungen (26, 61, 62, 64), mittels denen Leitungen, wie Medienleitungen und Energieversorgungsleitungen, entlang einem Installationsweg verlaufend an einer Gebäudedecke (10) installierbar sind, **dadurch gekennzeichnet, dass** eine Montageplattform (2) vorgesehen ist, die Querprofile (21) umfasst, die quer zum zugehörigen Installationsweg und durch Installationsdistanzen (d) voneinander beabstandet entlang dem Installationsweg angeordnet an oder in der Gebäudedecke (10) verankert sind und die durch formschlüssige Verbindungen oder Schraubverbindungen mit den Installationsvorrichtungen (26, 64) verbunden sind, die für jedes der Querprofile (21) wenigstens ein vertikal ausgerichtetes Montageprofil (26) aufweisen, das durch eine Verbindungsgarnitur (8) mit dem zugehörigen Querprofil (21) verbunden ist und das unterhalb der Montageplattform (2) durch eine formschlüssige Verbindung oder eine Schraubverbindung mit wenigstens einem horizontal ausgerichteten Horizontalausleger (62; 62L) verbunden ist, auf dem wenigstens eine Kabelbahn (61) abgelegt ist.

2. Deckenmontagevorrichtung (1) nach Anspruch 1 oder 2, **dadurch gekennzeichnet, dass** die Querprofile (21) durch Ankerelemente (4), wie Schrauben oder Segmentanker an der Gebäudedecke (10) verankert sind oder dass die Querprofile (21) bei der Fertigung der Gebäudedecke (10) in diese vorzugsweise bündig abschliessend integriert werden.

3. Deckenmontagevorrichtung (1) nach Anspruch 1 oder 2, **dadurch gekennzeichnet, dass** die Querprofile (21) einseitig oder beidseitig durch Kopplungsstücke (3) mit einem weiteren Querprofile (21) verbunden sind oder dass die Querprofile (21) mit vorzugsweise identisch ausgebildeten Längsprofilen (22) verbunden sind, wobei zwei Querprofile (21) und zwei Längsprofile (22) vorzugsweise einen Profilrahmen bilden.

4. Deckenmontagevorrichtung (1) nach Anspruch 1, 2 oder 3, **dadurch gekennzeichnet, dass** die Querprofile (21) und/oder die Montageprofile (26) ein Vierkant-Hohlprofil aufweisen und Seitenstücke (2S) umfassen, die an der Oberseite durch ein Mittelstück (2M) miteinander verbunden sind, und dass das Mittelstück (2M) und die Seitenstücke (2S) zueinander korrespondierende Lochreihen mit wenigstens einer Art von Montageöffnungen (28; 29) aufweisen.

5. Deckenmontagevorrichtung (1) nach einem der Ansprüche 1-4, **dadurch gekennzeichnet, dass** die Querprofile (21) Verzahnungen (2Z) aufweisen, an denen die Montageprofile (26) wahlweise positionierbar und durch eine der Verbindungsgarnituren (8) fixierbar sind.

6. Deckenmontagevorrichtung (1) nach einem der Ansprüche 1-5, **dadurch gekennzeichnet, dass** die Montageprofile (26) Verzahnungen (2Z) aufweisen, an denen die Horizontalausleger (62; 62L) wahlweise positionierbar und durch eine der Verbindungsgarnituren (8) fixierbar sind und/oder dass die Montageprofile (26) je eine Serie von Kopplungselementen aufweisen, in die einer der Horizontalausleger (62; 62L) an einer ausgewählten Position eingehängt ist.

7. Deckenmontagevorrichtung (1) nach einem der Ansprüche 1-6, **dadurch gekennzeichnet, dass** die Querprofile (21) Seitenstücke (2S) umfassen, die an der Unterseite gegeneinander gerichtete, Verzahnungen (2Z) aufweisende und einen Längsschlitz (20) begrenzende Fussstücke (2F) aufweisen und dass die Querprofile (21) mit dem Mittelstück (2M) gegen die Gebäudedecke (10) weisen.

8. Deckenmontagevorrichtung (1) nach einem der Ansprüche 1-7, **dadurch gekennzeichnet, dass** die Querprofile (21) zusammen mit Längsprofilen (22) einen Profilrahmen bilden, in den eine oder mehrteilige Blechwanne (5) eingesetzt ist, die eine Bodenplatte (59) und beidseits damit verbundene Flanschelemente (55) aufweist, die vorzugsweise winkelförmig ausgebildet und von den benachbarten Querprofilen (21) und/oder Längsprofilen (22) gehalten sind.

9. Deckenmontagevorrichtung (1) nach einem der Ansprüche 1-8, **dadurch gekennzeichnet, dass** wenigstens eines der Querprofile (21) und ein zugehöriges Montageprofil (26) durch eine Verbindungsgarnitur (8) miteinander verbunden sind, die mit einem ersten Kopplungselement (82; 83) in wenigstens eine Montageöffnung (28, 29) oder in die Verzahnung (2Z) des Querprofile (21) und mit einem zweiten Kopplungselement (82, 83), welches durch eine Gewindestange (81) mit dem ersten Kopplungselement (82, 83) verbunden ist, in wenigstens eine Montageöffnung (28, 29) des Montageprofils (26) eingreift.

10. Deckenmontagevorrichtung (1) nach einem der Ansprüche 1-9, **dadurch gekennzeichnet, dass** wenigstens einer der Horizontalausleger (62; 62L) und ein zugehöriges Montageprofil (62) durch eine Verbindungsgarnitur (8) miteinander verbunden sind, die mit einem ersten Kopplungselement (82), das mit dem Horizontalausleger (62; 62L) verschraubt ist, in die Verzahnung (2Z) des Montageprofils (26) eingreift.

11. Deckenmontagevorrichtung (1) nach einem der Ansprüche 1-10, **dadurch gekennzeichnet, dass** die Horizontalausleger (62; 62L) als L-Profile ausgebildet und an zentraler Stelle mit dem zugehörigen Montageprofil (26) verbunden sind oder dass die Horizontalausleger (62; 62L) einseitig mit dem zugehörigen Montageprofil (26) verbunden sind.

12. Deckenmontagevorrichtung (1) nach einem der Ansprüche 1-11, **dadurch gekennzeichnet, dass** mit jedem der Montageprofile (26) mehrere Horizontalausleger (62; 62L) derart verbunden sind, dass mehrere Montageebenen (A, B) gebildet werden.

13. Deckenmontagevorrichtung (1) nach einem der Ansprüche 1-12, **dadurch gekennzeichnet, dass** die Deckenmontagevorrichtung (1) mehrere Verkehrswege (x, y) abdeckt, die zumindest an einem Ort eine Schnittstelle bilden, wobei die Kabelbahnen (61) an der Schnittstelle stirnseitig an einen Verteilraum (V) angrenzen, innerhalb dessen die die in den Kabelbahnen (61) geführten Kabel (K) zwischen den Kabelbahnen (61) umverteilbar sind.

14. Deckenmontagevorrichtung (1) nach einem der Ansprüche 1-13, **dadurch gekennzeichnet, dass** die Montageplattform (2) durch Verbindungselemente (99) mit einer abgehängten Decke (100) verbunden oder mit Paneelen bestückt ist, die vorzugsweise je vereinzelt in einem Teilrahmen gehalten sind, der durch zwei Querprofile (21) und zwei Längsprofile (22) gebildet wird.

15. Verfahren zur Installation von Leitungen, wie Kabeln, Rohren, Stromschienen und weiteren Medienleitungen, mit einer Deckenmontagevorrichtung (1) nach einem der Ansprüche 1-13, **dadurch gekennzeichnet, dass** die Koordinaten der im Gebäude installierten Montageplattform (2) der Deckenmontagevorrichtung (1) erfasst und Koordinaten der Montageplattform (2) für die Montage der Installationsvorrichtungen (26, 61, 62, 64) und gegebenenfalls für Nachinstallationen festgelegt werden und entsprechend installierte Installationsvorrichtungen (26, 61, 62, 64) vorzugsweise registriert werden.
